# EUROPEAN PATENT APPLICATION

(11) **EP 3 836 625 A1**
(43) Date of publication of application: **16.06.2021**
(21) Application number: 19848340.6
(22) Date of filing: 09.08.2019
(51) Int. Cl.: H04W 36/00

(54) **NETWORK SWITCHING METHOD, AND AMF APPARATUS AND SGSN APPARATUS**

(30) Priority: 10.08.2018 CN 201810910746
(71) Applicant: China United Network Communications Group Company Limited, Beijing 100033 (CN)
(72) Inventor: REN, Chi, Beijing 100033 (CN); MA, Ruitao, Beijing 100033 (CN); MU, Jia, Beijing 100033 (CN)
(74) Representative: Casalonga
(86) International application number: PCT/CN2019/100099
(87) International publication number: WO 2020/030155

(57) **Abstract**

The embodiments of the present application discloses a network handover method, an AMF device, and an SGSN device, which relate to the field of communications technologies, and are used to solve a problem that seamless handover between an NG-RAN and a UTRAN cannot be performed in the prior art. The method includes: when the seamless handover from the NG-RAN to the UTRAN is completed, obtaining, by the AMF device, mobility context information of a user in the NG-RAN; transmitting, by the AMF device, mobility context information of the user to the SGSN device; obtaining, by the SGSN device according to the mobility context information of the user in the NG-RAN, mobility context information of the user in the UTRAN. Subsequently, the SGSN device and the AMF device complete the seamless handover from the NG-RAN to the UTRAN according to the mobility context information of the user in the UTRAN. When the seamless handover from the NG-RAN to the UTRAN is completed, the AMF device receives the mobility context information of the user in the UTRAN transmitted by the SGSN device, and obtains, according to the mobility context information of the user in the UTRAN, the mobility context information of the user in the NG-RAN. And the SGSN device and the AMF device then complete the seamless handover from the UTRAN to the NG-RAN according to the mobility context information of the user in the NG-RAN.

## Description

This application claims priority to Chinese Patent Application No. 201810910746.4, filed with China National Intellectual Property Administration on August 10, 2018, titled "NETWORK HANDOVER METHOD, AMF DEVICE AND SGSN DEVICE", which is incorporated herein by reference in its entirety.

### TECHNICAL FIELD

Embodiments of the present application relate to the field of communications technologies, and in particular, to a network handover method, an AMF device, and an SGSN device.

### BACKGROUND

In the Release 15 version of standard specifications for 5G system architecture, critical functions, and main processes, frozen in December, 2017, functions of a current 5th-generation (5G) mobile network system only include seamless handover between a next generation radio access network (NG-RAN) system and an evolved universal terrestrial radio access network (E-UTRAN, 4G wireless access network) system. However, in actual situations, the NG-RAN system generally adopts high-frequency coverage, and a coverage range of a single point is relatively small. Therefore, in the early and middle stages of the 5G network deployment, the E-UTRAN system still has a problem of incomplete coverage due to the deployment and optimization of the E-UTRAN system. As a result, even if it is possible to achieve the seamless handover between the NG-RAN system and the E-UTRAN system can be achieved, user data services will still be interrupted in a case where an uncovered region of the NG-RAN system is not covered by the E-UTRAN system.

Compared with the E-UTRAN system, a universal terrestrial radio access network (UTRAN, 3G radio access network) system has formed a relatively complete continuous coverage. If it is possible to achieve the seamless handover between the UTRAN system and the NG-RAN system, the problem of incomplete coverage of the E-UTRAN can be remedied. However, the prior art has not proposed a technology that can realize the seamless handover between the NG-RAN system and the UTRAN system.

### SUMMARY

Embodiments of the present application provide a network handover method, an AMF device, and an SGSN device, which are used to solve a problem that the prior art cannot realize the seamlessly handover between an NG-RAN system (hereinafter referred to as NG-RAN) and a UTRAN system (hereinafter referred to as UTRAN).

In a first aspect, a network handover method is provided, including:
obtaining, by an access and mobility management function (AMF) device, a target radio network controller (RNC) identifier (ID) and a network handover indication transmitted by a next generation radio access network (NG-RAN), wherein the target RNC ID is an RNC ID of a universal terrestrial radio access network (UTRAN);
obtaining, by the AMF device according to the network handover indication, session management context information of a user in a session management function (SMF) or a packet data network gateway control function (PGW-C) transmitted by the SMF or the PGW-C; wherein the session management context information includes: an evolved packet system (EPS) bearer ID for network handover, corresponding quality of service (QoS) information, and QoS flow information to be migrated;
transmitting, by the AMF device, mobility context information of the user in the NG-RAN to a serving GPRS support node (SGSN) device, wherein the SGSN device is determined by the AMF device according to the target RNC ID;
obtaining, by the SGSN device, mobility context information of the user in the UTRAN according to the mobility context information of the user in the NG-RAN;
transmitting, by the SGSN device according to the mobility context information of the user in the UTRAN, the EPS bearer ID for network handover and the corresponding QoS information to an RNC of the UTRAN;
transmitting, by the SGSN device, the EPS bearer ID for network handover, and an Internet protocol (IP) address and tunnel endpoint identifier (TEID) information of the SGSN device to the AMF device according to the mobility context information of the user in the UTRAN; and
transmitting, by the AMF device according to the EPS bearer ID, the IP address and the TEID information of the SGSN device, core network tunnel information and the QoS flow information to be migrated to a user equipment (UE) via the NG-RAN, so that the UE initiates a route update according to the core network tunnel information and the QoS flow information to be migrated.

The above method is used to implement seamless handover from the NG-RAN to the UTRAN. The AMF device obtains the target RNC ID and the network handover indication sent by the NG-RAN. The AMF device obtains, according to the network handover indication, session management context information of a user in the SMF or the PGW-C sent by the SMF or PGW-C, and transmits the same to the SGSN device, so that the SGSN device obtains, according to the mobility context information of the user in the NG-RAN, mobility context information of the user in the UTRAN. According to the mobility context information of the user in the UTRAN, the SGSN device not only transmits the EPS bearer ID for network handover and the corresponding QoS information to the RNC of the UTRAN, so as to notify the UTRAN of performing network handover; but also transmits the EPS bearer ID for network handover, and the IP address and the TEID information of the SGSN device to the AMF device, so that the AMF device transmits, according to the received information, the core network tunnel information and the QoS flow information to be migrated to the UE via the NG-RAN. As a result, the UE initiates the route update according to the core network tunnel information and the QoS flow information to be migrated, so as to implement the seamless handover from the NG-RAN to the UTRAN.

Optionally, before the UE initiates the route update according to the core network tunnel information and the QoS flow information to be migrated, the network handover method further includes: receiving, by the AMF device, relocation information transmitted by the SGSN device, wherein the relocation information includes location information of the RNC of the UTRAN.

Optionally, before the UE initiates the route update according to the core network tunnel information and the QoS flow information to be migrated, the network handover method further includes:
transmitting, by the SGSN device, a user plane IP address and TEID information of the UTRAN to a serving gateway (S-GW) according to the mobility context information of the user in the UTRAN, so that the S-GW notifies, according to the user plane IP address and the TEID information of the UTRAN, the SMF or the PGW-C of updating an access type; and
receiving, by the SGSN device, a user plane information update message transmitted by the SMF or the PGW-C via the S-GW, wherein the user plane information update message carries updated user plane tunnel information.

In a second aspect, an AMF device is provided, and the AMF device includes:
an obtaining module used to obtain a target radio network controller (RNC) identifier (ID) and a network handover indication transmitted by a next generation radio access network (NG-RAN), wherein the target RNC ID is an RNC ID of a universal terrestrial radio access network (UTRAN);
a processing module used to obtain session management context information of a user in a session management function (SMF) or a packet data network gateway control function (PGW-C) transmitted by the SMF or the PGW-C according to the network handover indication obtained by the obtaining module; wherein the session management context information includes: an evolved packet system (EPS) bearer ID for network handover, corresponding quality of service (QoS) information, and QoS flow information to be migrated; and
a transmitting module used to transmit mobility context information of the user in the NG-RAN to a serving GPRS support node (SGSN) device, wherein the SGSN device is determined by the transmitting module according to the target RNC ID.

The transmitting module is further used to transmit, according to the EPS bearer ID, and an ID address and TEID information of the SGSN device transmitted by the SGSN device, core network tunnel information and the QoS flow information to be migrated to a user equipment (UE) via the NG-RAN, so that the UE initiates a route update according to the core network tunnel information and the QoS flow information to be migrated.

Optionally, the AMF device further includes a receiving module used to receive relocation information transmitted by the SGSN device, and the relocation information includes location information of an RNC of the UTRAN.

It will be understood that the AMF device provided above is used to implement the method corresponding to the first aspect provided above. Therefore, for beneficial effects that the AMF device is able to achieve, reference may be made to beneficial effects of the method in the first aspect above and corresponding solutions in following specific implementation manners, which will not be repeated here.

In a third aspect, an SGSN device is provided, and the SGSN device includes:
a processing module used to obtain mobility context information of a user in a universal terrestrial radio access network (UTRAN) according to mobility context information of the user in a next generation radio access network (NG-RAN) transmitted by an access and mobility management function (AMF) device; and
a transmitting module used to transmit, according to the mobility context information of the user in the UTRAN, an evolved packet system (EPS) bearer identifier (ID) for network handover and corresponding quality of service (QoS) information to a radio network controller (RNC) of the UTRAN.

The transmitting module is further used to transmit, according to the mobility context information of the user in the UTRAN, the EPS bearer ID for network handover, and an Internet protocol (IP) address and tunnel endpoint identifier (TEID) information of the SGSN device to the AMF device.

Optionally, the transmitting module is further used to transmit relocation information to the AMF device, wherein the relocation information includes location information of the RNC of the UTRAN.

Optionally, the transmitting module is further used to transmit, according to the mobility context information of the user in the UTRAN, a user plane IP address and TEID information of the UTRAN to a serving gateway (S-GW), so that the S-GW notifies, according to the user plane IP address and the TEID information of the UTRAN, a session management function (SMF) or a packet data network gateway control function (PGW-C) of updating an access type. A receiving module is used to receive a user plane information update message transmitted by the SMF or the PGW-C via the S-GW, wherein the user plane information update message carries updated user plane tunnel information.

It will be understood that the SGSN device provided above is used to implement the method corresponding to the first aspect provided above. Therefore, for the beneficial effects that the SGSN device is able to achieve, reference may be made to beneficial effects of the method in the first aspect above and corresponding solutions in following specific implementation manners, which will not be repeated here.

In a fourth aspect, a network handover method is provided, and method includes:
receiving, by a serving GPRS support node (SGSN) device, a target next generation radio access network (NG-RAN) identifier and track area identity (TAI) information for selecting an NG-RAN that are transmitted by a network controller (RNC) of a universal terrestrial radio access network (UTRAN);
transmitting, by the SGSN device, mobility context information of a user in the UTRAN to an access and mobility management function (AMF) device, wherein the AMF device is determined by the SGSN device according to the target NG-RAN identifier and the TAI information;
obtaining, by the AMF device, mobility context information of the user in the NG-RAN according to the mobility context information of the user in the UTRAN;
transmitting, by the AMF device according to the mobility context information of the user in the NG-RAN, an N3 interface Internet protocol (IP) address and tunnel endpoint identifier (TEID) information of a user plane function (UPF), and an evolved packet system (EPS) bearer list that needs to be migrated to the NG-RAN to the SGSN device;
transmitting, by the SGSN device, the N3 interface IP address and the TEID information of the UPF, and the EPS bearer list that needs to be migrated to the NG-RAN to a user equipment (UE) via the RNC of the UTRAN, so that the UE synchronizes with the NG-RAN;
receiving, by the AMF device, an N3 interface IP address and TEID information of the NG-RAN that are transmitted by the NG-RAN; and
transmitting, by the AMF device, a handover completion indication to a session management function (SMF), so as to notify, via the SMF, the UPF of updating downlink tunnel information to be the N3 interface IP address and the TEID information of the NG-RAN, so that the UE receives uplink data and downlink data via the NG-RAN.

The above method is used to implement seamless handover from the UTRAN to the NG-RAN. The SGSN device determines the AMF device according to the target NG-RAN identifier and the TAI information for selecting the NG-RAN that are sent by the UTRAN, and transmits the mobility context information of the user in the UTRAN to the AMF device, so that the AMF device obtains the mobility context information of the user in the NG-RAN according to the mobility context information of the user in the UTRAN. In subsequent processes, the AMF device synchronizes the N3 interface IP address and the TEID information of the UPF to the NG-RAN, and updates UPF downlink tunnel information to be an N3 interface IP address and TEID information of the NG-RAN, so as to establish N3 between the NG-RAN and the UPF. As a result, the UE is able to transmit and receive uplink data and downlink data via the NG-RAN, and the seamless handover from the UTRAN to the NG-RAN is implemented.

Optionally, transmitting, by the AMF device according to the mobility context information of the user in the NG-RAN, the N3 interface IP address and the TEID information of the UPF, and the EPS bearer list that needs to be migrated to the SGSN device is specifically:
obtaining, by the AMF device according to the mobility context information of the user in the NG-RAN, a protocol data unit (PDU) session ID allocated for a public data network (PDN) connection to be migrated, quality of service (QoS) profile information, a QoS flow ID, and the EPS bearer list that needs to be migrated to the NG-RAN that are transmitted by the SMF;
obtaining, by the AMF device according to the PDU session ID, the QoS profile information, the QoS flow ID , and the EPS bearer list that needs to be migrated to the NG-RAN, PDU session ID activated on the NG-RAN, QoS flow ID , and the N3 interface IP address and the TEID information of the NG-RAN that are transmitted by the NG-RAN;
obtaining, by the AMF device according to PDU session ID , QoS flow ID , and the N3 interface IP address and the TEID information of the NG-RAN, the N3 interface IP address and the TEID information of the UPF via the SMF; and
transmitting, by the AMF device, the N3 interface IP address and the TEID information of the UPF, and the EPS bearer list that needs to be migrated to the NG-RAN to the SGSN device.

In a fourth aspect, an AMF device is provided, the AMF device includes:
a first processing module used to obtain mobility context information of a user in an NG-RAN according to mobility context information of the user in a UTRAN;
a second processing module used to transmit, according to the mobility context information of the user in the NG-RAN obtained from the first obtaining module, an N3 interface IP address and TEID information of a UPF, and an EPS bearer list that needs to be migrated to the NG-RAN to an SGSN device;
a receiving module used to receive an N3 interface IP address and TEID information of the NG-RAN that are transmitted by the NG-RAN; and
an indication module used to transmit a handover completion indication to an SMF, so as to notify, via the SMF, the UPF of updating downlink tunnel information to be the N3 interface IP address and the TEID information of the NG-RAN, so that a UE receives uplink data and downlink data via the NG-RAN.

Optionally, the second processing module is specifically used to obtain, according to the mobility context information of the user in the NG-RAN, a PDU session ID allocated for PDN connection to be migrated, QoS profile information, a QoS flow ID, and the EPS bearer list that needs to be migrated to the NG-RAN that are transmitted by the SMF;
obtain, according to the PDU session ID, the QoS profile information, the QoS flow ID, and the EPS bearer list that needs to be migrated to the NG-RAN, the PDU session ID activated on the NG-RAN, QoS flow ID, and the N3 interface IP address and the TEID information of the NG-RAN that are transmitted by the NG-RAN;
obtain, according to PDU session ID, QoS flow ID , and the N3 interface IP address and the TEID information of the NG-RAN, the N3 interface IP address and the TEID information of the UPF via the SMF; and
transmit the N3 interface IP address and the TEID information of the UPF, and the EPS bearer list that needs to be migrated to the NG-RAN to the SGSN device.

It will be understood that the AMF device provided above is used to implement the method corresponding to the fourth aspect provided above. Therefore, for beneficial effects that the AMF device is able to achieve, reference may be made to beneficial effects of the method in the above fourth aspect and corresponding solutions in following specific implementation manners, which will not be repeated here.

In a fifth aspect, an SGSN device is provided, and the SGSN device includes:
a receiving module used to receive a target NG-RAN identifier and TAI information for selecting an NG-RAN transmitted by a network controller (RNC) of a UTRAN;
a transmitting module used to transmit mobility context information of a user in the UTRAN to an AMF device; wherein the AMF device is determined by the SGSN device according to the target NG-RAN identifier and the TAI information; and
a processing module used to transmit, via the RNC of the UTRAN, an N3 interface IP address and TEID information of a UPF, and an EPS bearer list that needs to be migrated to the NG-RAN that are obtained from the AMF device to a UE, so that the UE synchronizes with the NG-RAN.

In a sixth aspect, an AMF device is provided, and the AMF device includes one or more processors. The processor is used to execute a computer program code including instructions in a memory, so that the AMF device performs the above-mentioned network handover methods in the first and fourth aspects.

In a seventh aspect, an SGSN device is provided. The SGSN device includes one or more processors used to execute a computer program code including instructions in a memory, so that an AMF device performs the above-mentioned network handover methods in the first and fourth aspects.

In an eighth aspect, a storage medium is provided. The storage medium stores instructions, and the instructions are used to execute the above-mentioned network handover methods in the first and fourth aspect.

In a ninth aspect, a computer program product is provided. The computer program product includes instructions, and the instructions are used to perform the network handover methods in the first and fourth aspects.

It will be understood that the SGSN device provided above is used to implement the method corresponding to the fourth aspect provided above. Therefore, for the beneficial effects achieved by the SGSN device, reference may be made to the beneficial effects of the method in the foregoing fourth aspect and corresponding solutions in following specific implementation manners, which will not be repeated here.

### BRIEF DESCRIPTION OF THE DRAWINGS

FIG. 1 is a system architecture diagram of a network handover method, in accordance with embodiments of the present application;
FIG. 2 is a flow diagram of a network handover method, in accordance with embodiments of the present application;
FIG. 3 is a handover flow diagram of a network handover method, in accordance with embodiments of the present application;
FIG. 4 is a schematic diagram showing a structure of an AMF device, in accordance with embodiments of the present application;
FIG. 5 is a schematic diagram showing a structure of an SGSN device, in accordance with embodiments of the present application;
FIG. 6 is a flow diagram of a network handover method, in accordance with embodiments of the present application;
FIG. 7 is a flow diagram of a network handover method, in accordance with embodiments of the present application;
FIG. 8a is a handover flow diagram of a network handover method in a preparation phase, in accordance with embodiments of the present application;
FIG. 8b is a handover flow diagram of a network handover method in a execution phase, in accordance with embodiments of the present application;
FIG. 9 is a schematic diagram showing a structure of an AMF device, in accordance with embodiments of the present application;
FIG. 10 is a schematic diagram showing a structure of an SGSN device, in accordance with embodiments of the present application;
FIG. 11 is a schematic diagram showing a structure of an SGSN device, in accordance with embodiments of the present application; and
FIG. 12 is a schematic diagram showing a structure of an SGSN device, in accordance with embodiments of the present application.

### DETAILED DESCRIPTION

The technical solutions in embodiments of the present disclosure will be described clearly and completely in combination with the accompanying drawings in the embodiments of the present disclosure. However, the described embodiments are merely some but not all of the embodiments of the present disclosure.

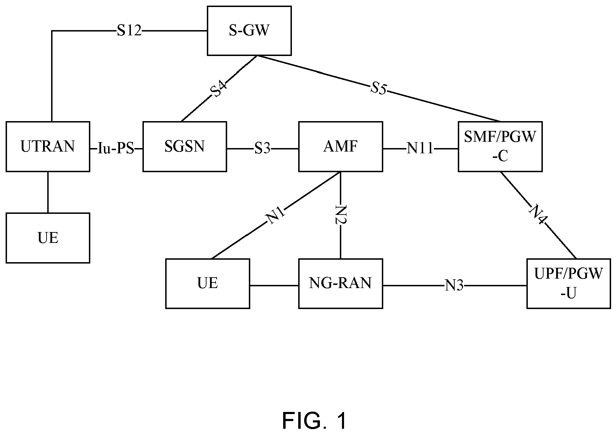

FIG. 1 is a system architecture diagram of a network handover method, in accordance with the embodiments of the present application. As shown in FIG. 1, the system architecture of the network handover method provided in the embodiments of the present application includes:
an access and mobility management function (AMF) device, a serving GPRS support node (SGSN) device, a user equipment (UE), the serving gateway (S-GW), the session management function (SMF) or the packet data network gateway control function (PGW-C), the user plane function (UPF) or the packet data network gateway user function (PGW-U), a universal terrestrial radio access network (UTRAN, 3G wireless access network), and a next generation radio access network (NG-RAN). The PGW-C and the PGW-U are corresponding to the control plane and the user plane into which the PGW are split, respectively.

Specific functions of the above-mentioned devices are as follows. The AFM is used to implement registration management, connection management, mobility management and user reachability management, and to participate in management functions related to authentication and authorization, etc. The SMF is used to implement functions related to session management, including establishment, modification, and release. Specific functions include Internet protocol (IP) address allocation during session establishment, selection and control of user plane function, configuration of service routing and user plane (UP) traffic guidance, determination of the session and service continuity (SSC) mode, and configuration of quality of service (QoS) policies of the UPF. The UPF mainly provides service processing functions of the user plane, including service routing, packet forwarding, anchoring functions, QoS mapping and execution, uplink identification recognition and routing of the uplink to a data network, downlink packet buffering and downlink data arrival notification triggering, and connection with an external data network. The S-GW is responsible for user plane processing and functions such as data packet routing and forwarding, and supports handover of different 3rd Generation Partnership Project (3GPP) access technologies. The PGW is used for bearer control, a user-based packet filtering function, an IP address allocation function of a UE, transport layer packet marking in the uplink and the downlink, charging, QoS control, and non-3rd Generation Partnership Project (3GPP) access, etc.

Connection relationships of the above devices are as follows. The AMF device supports the S3 interface of the SGSN device to support the transmission of mobility context information of users between the AMF device and the SGSN device. The SGSN device and the UTRAN are connected through the lu-PS interface, the SGSN device and the AMF device are connected through the S3 interface, and the SGSN device and the S-GW are connected through the S4 interface. The S-GW and the SMF are connected through the S5 interface, and the S-GW and the UTRAN are connected through the S12 interface. The SMF and the UPF are connected through the N4 interface, and the UPF and the NG-RAN are connected through the N3 interface. The AMF and the NG-RAN are connected through the N2 interface, and the AMF and the UE are connected through the N1 interface. The AMF and the SMF are connected through the N11 interface.

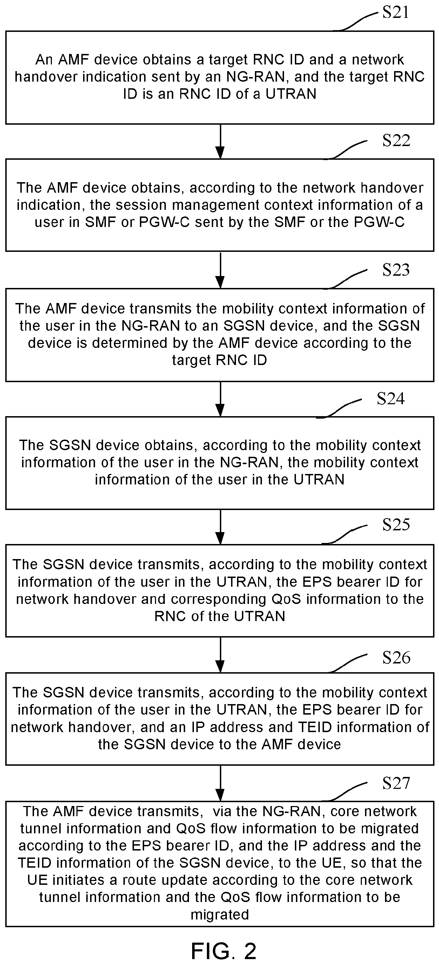

FIG. 2 is a flow diagram of a network handover method, in accordance with embodiments of the present application. Before the present embodiment is implemented, it is determined that the UE has registered in the NG-RAN, and there is an activated protocol data unit (PDU) session in the NG-RAN. The network handover in the present embodiment is a handover from the NG-RAN to the UTRAN. As shown in FIG. 2, the method includes the following steps.

In S21, an access and mobility management function (AMF) device obtains a target RNC ID and a network handover indication transmitted by an NG-RAN, wherein the target RNC ID is the RNC ID of a UTRAN.

According to information such as the network measurement report, the NG-RAN determines to handover the UE from the NG-RAN to the UTRAN. The NG-RAN then transmits the target RNC ID and the network handover indication to the AMF device. The RNC ID is used to verify the NG-RAN itself in a subsequent step. The network handover indication includes indication information for handover from the NG-RAN to the UTRAN.

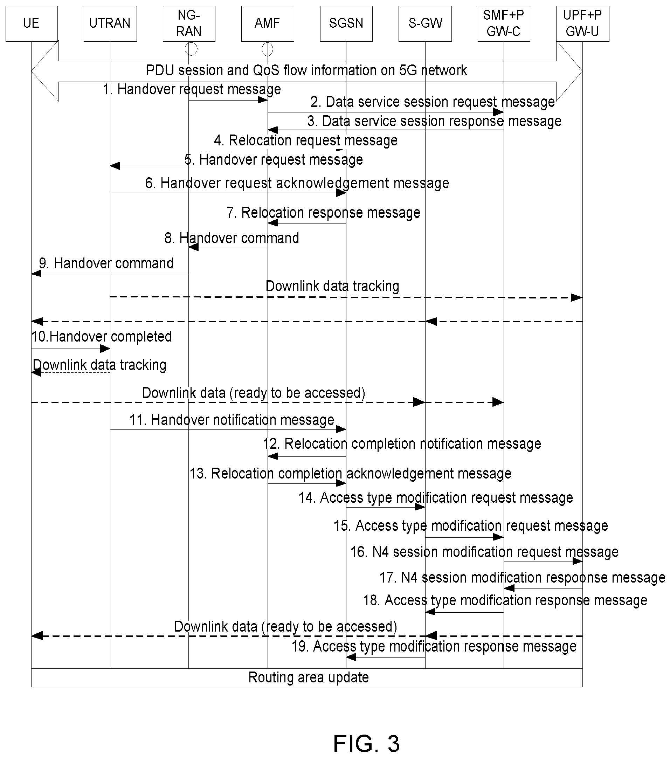

In a specific implementation, information exchange between the NG-RAN and the AMF device is shown as 1 in FIG. 3. The NG-RAN transmits a handover request message (e.g., Handover Request) to the AMF device, and the handover request message carries the target RNC ID and the network handover indication transmitted by the NG-RAN.

In S22, the AMF device obtains, according to the network handover indication, session management context information of a user in the SMF/PGW-C transmitted by the SMF/PGW-C.

Specifically, if it is determined, by the AMF device according to the network handover indication, that the network handover is a handover from the NG-RAN to the UTRAN, a data service session request message is then transmitted to the SMF/PGW-C, so as to request context information of session management (SM) of the activated PDU session from the SMF through the data service session request message. The session management context information of the user in the SMF is then fed back to the AMF device by the SMF/PGW-C according to the above request. For specific information exchange, reference may be made to 2 and 3 in FIG. 3. In the 2, the AMF device transmits a data service session request message (e.g., Nsmf_PDUSession_ContextRequest) to the SMF/PGW-C. In the 3, the SMF/PGW-C returns a data service session reply message (e.g., Nsmf_PDUSession_ContextResponse) to the AMF device. The data service session reply message carries the session management context information of the user in the SMF. Through this step, the AMF device obtains session management context information of the user in the SMF. The session management context information includes relevant information such as an evolved packet system (EPS) bearer ID for network handover, corresponding QoS information, and QoS flow information to be migrated.

In S23, the AMF device transmits mobility context information of the user in the NG-RAN to an SGSN device, and the SGSN device is determined by the AMF device according to the target RNC ID.

Specifically, the AMF device determines the SGSN device corresponding to the target RNC ID according to the target RNC ID, and transmits the mobility context information of the user in the NG-RAN obtained in step S21 to the SGSN device. This step corresponds to 4 of FIG. 3 in which the AMF device transmits a relocation request message (e.g., Relocation Request) to the SGSN device determined according to the target RNC ID, wherein the relocation request message carries information such as the mobility context information of the user in the NG-RAN and the session management information in the SMF.

In step S24, the SGSN device obtains, according to the mobility context information of the user in the NG-RAN, mobility context information of the user in the UTRAN.

Specifically, this step does not include information exchange between devices. The process of obtaining the mobility context information of the user in the UTRAN according to the mobility context information in the NG-RAN is performed by the SGSN device.

In S25, the SGSN device transmits, according to the mobility context information of the user in the UTRAN, the EPS bearer ID for network handover and corresponding quality of service (QoS) information to the RNC of the UTRAN.

Specifically, this step includes that the UTRAN determines whether the SGSN device successfully obtains mobility context information of the user in the UTRAN, and the step corresponds to 5 and 6 in FIG. 3. The SGSN device transmits a handover request message to the UTRAN, and the request message includes the EPS bearer ID for network handover and corresponding quality of service (QoS) information. The UTRAN determines, according to the EPS bearer ID and the corresponding QoS information, whether mobility context information of the user in the UTRAN has been successfully obtained. If yes, a handover request message acknowledgement message is returned to the SGSN device, and in this case, the network side has been switched to the UTRAN successfully. Otherwise, it means that the SGSN device fails to obtain mobility context information of the user in the UTRAN.

In S26, the SGSN device transmits the EPS bearer ID for network handover, an IP address and tunnel endpoint identifier (TEID) information of the SGSN device to the AMF device according to the mobility context information of the user in the UTRAN.

This step and the next step are specifically used to implement the handover of the UTRAN on the UE side. Specifically, the SGSN device transmits a network handover command (e.g., Handover request) to the UE via the AMF device and the NG-RAN in sequence. This step corresponds to 7 in FIG. 3. In this step, the SGSN device transmits a relocation acknowledgement message (e.g., Relocation Request) to the AMF device, and the relocation acknowledgement message carries the EPS bearer ID for network handover, the IP address and the TEID information of the SGSN device.

In S27, the AMF device transmits, according to the EPS bearer ID, the IP address and the TEID information of the SGSN device, core network tunnel information and QoS flow information to be migrated to the UE via the NG-RAN, so that the UE initiates a route update according to the core network tunnel information and the QoS flow information to be migrated.

Specifically, this step may be referred to 8 to 10 in FIG. 3. In 8 of FIG. 3, the AMF device transmits a handover command to the NG-RAN, and the handover command carries the core network tunnel information and the QoS flow information to be migrated. In 9 of FIG. 3, the NG-RAN forwards the handover command to the UE. In 10 of FIG. 3, after the handover is completed, the UE returns a handover completion message to the NG-RAN to notify the NG-RAN network that the network handover from the NG-RAN to the UTRAN is completed.

Optionally, before the UE initiates the route update according to the core network tunnel information and the QoS flow information to be migrated, the AMF device may further receive relocation information transmitted by the SGSN device. The relocation information includes location information of the RNC of the UTRAN, which corresponds to steps 11 to 13 in FIG. 3. In 11 of FIG. 3, the UTRAN transmits a handover notification message (e.g., Handover Notify) to the SGSN device, and the handover notification message carries the location information of the RNC of the UTRAN. In 12 of FIG. 3, the SGSN device transmits a relocation completion notification message (e.g., Relocation Complete Notification) to the AMF device, and the relocation completion notification message includes the location information of the RNC of the UTRAN, so as to notify the AMF device that the relocation is completed. In 13 of FIG. 3, the AMF device returns a relocation completion acknowledgement message (e.g., Relocation Complete ACK) to the SGSN device, so as to confirm the relocation of the location information of the RNC of the UTRAN.

Optionally, before the UE initiates the route update according to the core network tunnel information and the QoS flow information to be migrated, the SGSN device may also transmit a user plane IP address and the TEID information of the UTRAN to an S-GW according to the mobility context information of the user in the UTRAN, so that the S-GW notifies, according to the user plane IP address and the TEID information of the UTRAN, the SMF/PGW-C of updating an access type. Specifically, reference may be made to 14 to 18 in FIG. 3. In 14 of FIG. 3, the SGSN device transmits an access type modification request message (e.g., Modify bearer Request) to the S-GW, and the access type modification request message carries the user plane IP address and the TEID information of the UTRAN. In 15 of FIG. 3, the S-GW forwards the access type modification request message to the SMF, so as to notify the SMF of the modification of the access type and updating the access type. In 16 of FIG. 3, the SMF transmits an N4 session modification request message (i.e., a user plane information update message, e.g., N4 Session Modification Request) to the UPF, wherein the user plane information update message carries updated user plane tunnel information, for example, the user plane information update message carries the user plane IP address (i.e., the updated user plane tunnel information), so as to update the user plane tunnel information. In 17 of FIG. 3, the UPF replies to the SMF with a session modification response message (e.g., N4 Session Modification Response), so as to acknowledge the update of the user plane. In 18 and 19 of FIG. 3, the SMF replies to the SGSN via the S-GW with an access type modification response message (e.g., Modify bearer Response), so as to acknowledge the type modification. In 18, the SMF replies to the S-GW with the access type modification response message. In 19, the S-GW replies to the SGSN with the access type modification response message. In a specific implementation, the above steps may be used to update subsequent user charging information.

The foregoing method is used to implement seamless handover from the NG-RAN to the UTRAN. The AMF device obtains the target RNC ID and the network handover indication transmitted by the NG-RAN. The AMF device obtains, according to the network handover indication, session management context information of the user in the SMF transmitted by the SMF/PGW-C, and transmits the information to the SGSN device, so that the SGSN device obtains the mobility context information of the user in the UTRAN according to the mobility context information of the user in the NG-RAN. In an aspect, the SGSN device transmits the EPS bearer ID for network handover and the corresponding QoS information to the RNC of the UTRAN according to the mobility context information of the user in the UTRAN, so as to notify the UTRAN of performing network handover; and in another aspect, the SGSN device transmits the EPS bearer ID for network handover, the IP address and the TEID information of the SGSN device to the AMF device, so that the AMF device transmits, according to the received information, the core network tunnel information and the QoS flow information to be migrated to the UE via the NG-RAN. As a result, the UE initiates the route update according to the core network tunnel information and the QoS flow information to be migrated, so as to implement the seamless handover from the NG-RAN to the UTRAN.

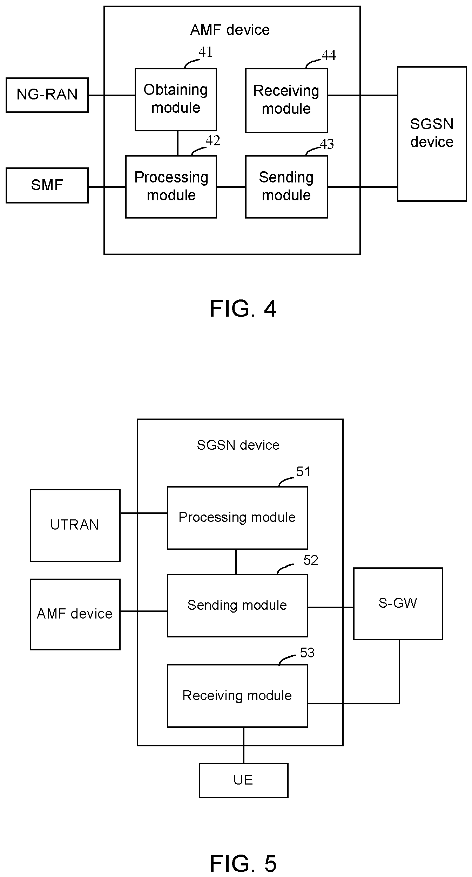

FIG. 4 is a schematic diagram showing a structure of an AMF device, in accordance with embodiments of the present application. As shown in FIG. 4, the device includes:
an obtaining module 41 used to obtain a target RNC ID and a network handover indication transmitted by an NG-RAN, wherein the target RNC ID is an RNC ID of a UTRAN;
a processing module 42 used to obtain, according to the network handover indication obtained by the obtaining module 41, session management context information of a user in SMF/PGW-C transmitted by the SMF/PGW-C; wherein the session management context information includes an EPS bearer ID for network handover, corresponding quality of service (QoS) information, and QoS flow information to be migrated; and
a transmitting module 43 used to transmit the mobility context information of the user in the NG-RAN to an SGSN device, wherein the SGSN device is determined by the AMF device according to the target RNC ID.

The transmitting module 43 is further used to transmit, according to the EPS bearer ID, an IP address and TEID information of the SGSN device transmitted by the SGSN device, core network tunnel information and QoS flow information to be migrated to a UE via the NG-RAN, so that the UE initiates a route update according to the core network tunnel information and the QoS flow information to be migrated.

Optionally, the AMF device further includes a receiving module 44 used to receive relocation information transmitted by the SGSN device, wherein the relocation information includes location information of an RNC of the UTRAN.

All relevant contents of the steps involved in the foregoing method embodiments may be invoked in functional description of corresponding functional modules of the AMF device, and their roles are not repeated here.

FIG. 5 is a schematic diagram showing a structure of an SGSN device, in accordance with embodiments of the present application. As shown in FIG. 5, the device includes:
a processing module 51 used to obtain mobility context information of a user in a UTRAN according to the mobility context information of the user in an NG-RAN transmitted by an AMF device; and
a transmitting module 52 used to transmit an EPS bearer ID for network handover and corresponding QoS information to an RNC of the UTRAN according to mobility context information of the user in the UTRAN.

The transmitting module 52 is further used to transmit, according to mobility context information of the user in the UTRAN obtained by the processing module 51, the EPS bearer ID for network handover, and an IP address and TEID information of the SGSN device to the AMF device.

Optionally, the transmitting module 52 is further used to transmit relocation information to the AMF device, wherein the relocation information includes location information of the RNC of the UTRAN.

Optionally, the transmitting module 52 is further used to transmit, according to the mobility context information of the user in the UTRAN, a user plane IP address and TEID information of the UTRAN to an S-GW, so that the S-GW notifies, according to the user plane IP address and the TEID information of the UTRAN, the SMF/PGW-C of updating an access type.

A receiving module 53 is used to receive the user plane information update message transmitted by the SMF/PGW-C via the S-GW. The user plane information update message carries updated user plane tunnel information.

All relevant contents of the steps involved in the above method embodiments may be invoked in functional description of corresponding functional modules of the SGSN device, and their roles are not repeated here.

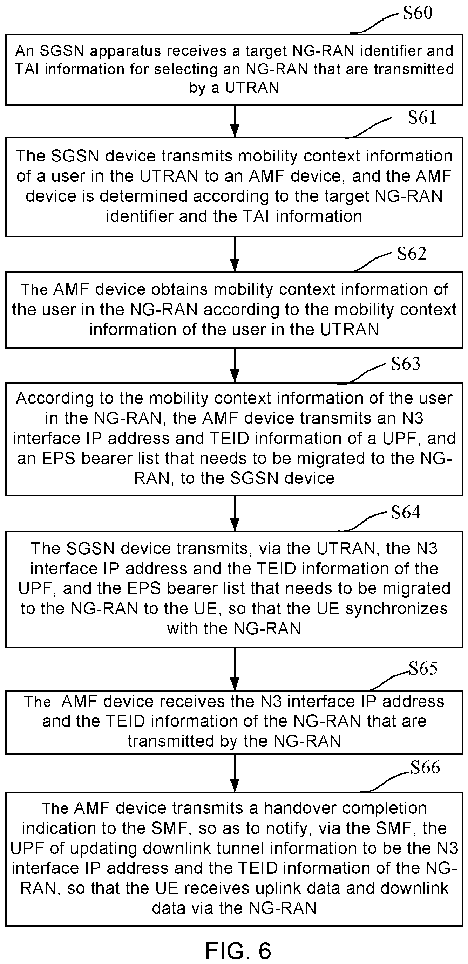

FIG. 6 is a flow diagram of a network handover method, in accordance with the present application. Before the present embodiment is performed, it is determined that the user resides in a UTRAN network, and there is an activated data service session in the UTRAN. The network handover in the present embodiment is a handover from the UTRAN to the NG-RAN, which includes a preparation phase and an execution phase. S60 to S63 are the preparation phase in the present embodiment, and S64 to S66 are the execution phase. As shown in FIG. 6, the method includes S60 to S66.

In S60, an SGSN device receives a target NG-RAN identifier and track area identity (TAI) information for selecting an NG-RAN that are transmitted by a UTRAN.

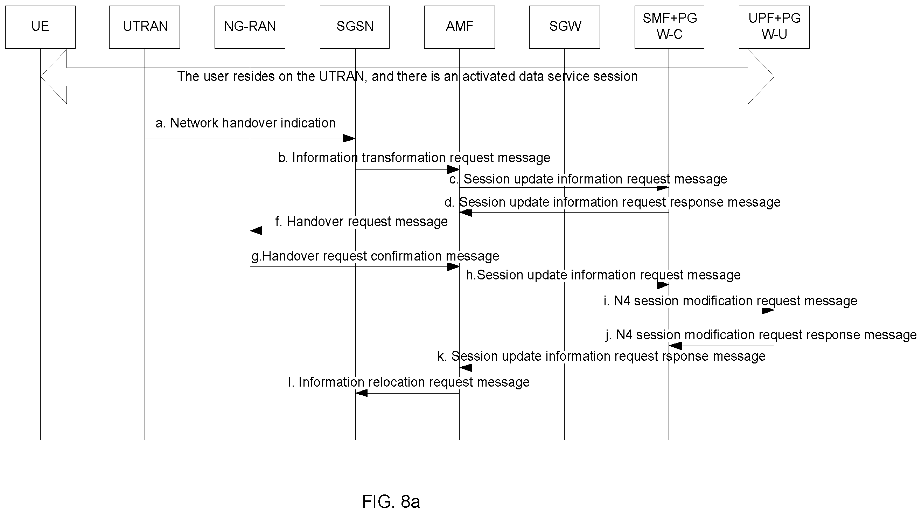

Specifically, if the UTRAN determines to hand over the UTRAN to the NG-RAN according to information such as a network measurement report, the UTRAN then transmits the target NG-RAN identifier and the TAI information for selecting the NG-RAN to the SGSN device. In specific implementation, information exchange between the UTRAN and the SGSN device is as shown in a of FIG. 8a. In a of FIG. 8a, the UTRAN transmits a network handover indication (e.g., Handover Required) to the SGSN device. The "Handover Required" message carries the target NG-RAN identifier and the TAI information for selecting the NG-RAN.

In S61, the SGSN device transmits mobility context information of a user in the UTRAN to an AMF device, and the AMF device is determined according to the target NG-RAN identifier and the TAI information.

As shown in b in FIG. 8a, the SGSN device determines one AMF device according to the target NG-RAN identifier and the TAI information, and transmits an information transformation request message (e.g., Forward Relocation Request) to the AMF device. The information transformation request message carries mobility context information of the user in the UTRAN. It will be noted herein that both a number of the SGSN devices and a number of the AMF devices determined by the SGSN device according to the target NG-RAN identifier and the TAI information may be one or more, as long as a corresponding relationship between the AMF device and the SGSN device can be determined. The present application does not limit the number of the AMF devices and the number of the SGSN devices.

In S62, the AMF device obtains mobility context information of the user in the NG-RAN according to the mobility context information of the user in the UTRAN.

Specifically, this step does not include information exchange between devices. The process of obtaining the mobility context information of the user in the NG-RAN according to the mobility context information in the UTRAN is performed by the AMF device.

In S63, according to the mobility context information of the user in the NG-RAN, the AMF device transmits an N3 interface IP address and TEID information of a UPF, and an EPS bearer list that needs to be migrated to the NG-RAN, to the SGSN device.

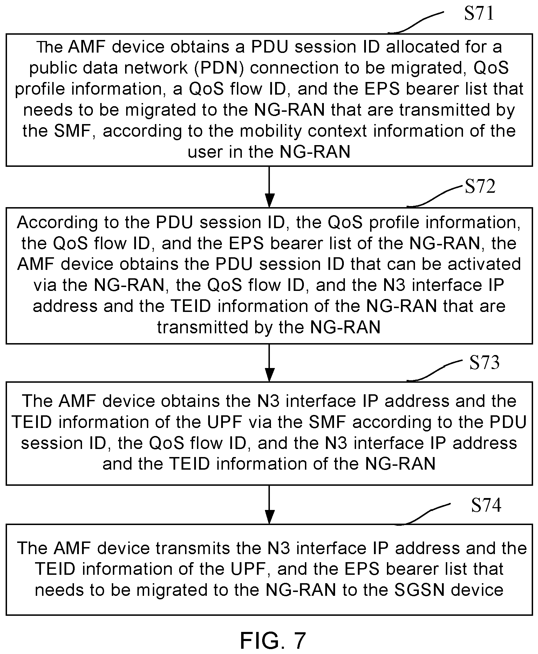

Specifically, for an execution process of this step, reference may be made to FIG. 7. As shown in FIG. 7,

in S71, the AMF device obtains a PDU session ID allocated for a public data network (PDN) connection to be migrated, QoS profile information, a QoS flow ID, and the EPS bearer list that needs to be migrated to the NG-RAN that are transmitted by the SMF, according to the mobility context information of the user in the NG-RAN.

Specifically, for the information exchange among devices in this step, reference may be made to c to d in FIG. 8a. In c of FIG. 8a, the AMF apparatus first transmits a session update information request message (e.g., Nsmf_PDUSession_UpdateSMContext Request) to the SMF, and the session update information request message carries PDN connection information activated by a UE, AMF IP of the AMF, and the TEID information of the AMF. The AMF IP is used to authenticate the AMF that transmits information. In d of FIG. 8a, the SMF returns a session update information request response message (e.g., Nsmf_PDUSession_UpdateSMContext Response) to the AMF device according to the received information, and the session update information request response message includes the PDU session ID that is allocated for the PDN connection to be migrated according to the activated PDN connection information, the QoS profile information, the QoS flow ID, and the EPS bearer list that needs to be migrated to the NG-RAN.

In S72, according to the PDU session ID, the QoS profile information, the QoS flow ID, and the EPS bearer list of the NG-RAN, the AMF device obtains the PDU session ID that can be activated via the NG-RAN, the QoS flow ID, and the N3 interface IP address and the TEID information of the NG-RAN that are transmitted by the NG-RAN.

Specifically, for the information exchange among devices in this step, reference may be made to f to g in FIG. 8a. In f of FIG. 8a, the AMF device transmits a handover request message (e.g., Handover Request) to the NG-RAN, and the handover request message carries the PDU session ID, the QoS profile information, the QoS flow ID, and the EPS bearer list that needs to be migrated to the NG-RAN. In g of FIG. 8a, the NG-RAN returns a handover request acknowledgement message (e.g., Handover Request ACK) according to the above information, and the handover request confirmation message carries the PDU session ID that can be activated via the NG-RAN, the QoS flow ID, and the N3 interface IP address and the TEID information of the NG-RAN. This step aims to determine whether the NG-RAN successfully receives the PDU session ID, the QoS profile information, the QoS flow ID, and the EPS bearer list information of the NG-RAN that are carried in the handover request message. If the NG-RAN successfully receives the handover request message transmitted by the AMF device, then returns a message which carries the PDU session ID that can be activated via the NG-RAN, the QoS flow ID, and the N3 interface IP address and TEID information of the NG-RAN, to the AMF device. Otherwise, no message is returned to the AMF device, and the handover request fails.

In S73, the AMF device obtains the N3 interface IP address and the TEID information of the UPF via the SMF according to the PDU session ID, the QoS flow ID, and the N3 interface IP address and the TEID information of the NG-RAN.

Specifically, as shown in FIG. 8a, in h of FIG. 8a, the AMF device transmits a session update information request message (e.g., Nsmf_PDUSession_UpdateSMContext Request) to the SMF, and the session update information request message carries the PDU session ID, the QoS flow ID, and the N3 interface IP address and the TEID information of the NG-RAN. In i of FIG. 8a, the SMF transmits an N4 session modification request message (e.g., N4 Session Modification Request) carrying the above information to the UPF. In j of FIG. 8a, the SMF returns an N4 session modification request response message (e.g., N4 Session Modification Response), and the session modification request response message carries the N3 interface IP address and the TEID information of the UPF. In k of FIG. 8a, the SMF transmits a session update information request response message (e.g., Nsmf_PDUSession_UpdateSMContext Response) to the AMF, and the session modification request response message carries the N3 interface IP address and the TEID information of the UPF.

In S74, the AMF device transmits the N3 interface IP address and the TEID information of the UPF, and the EPS bearer list that needs to be migrated to the NG-RAN to the SGSN device.

Specifically, as shown in FIG. 8a, in I of FIG. 8a, the AMF transmits an information transformation response message (i.e., an information relocation request message, e.g., Forward Relocation Response) to the SGSN, and the information transformation response message carries the N3 interface IP address and the TEID information of the UPF, the EPS bearer list to be migrated to the NG-RAN, the EPS bearer list to be activated on the NG-RAN and an AMF device ID to be transmitted to the SGSN device. At this point, the preparation phase is completed, and N3 is successfully established between the NG-RAN and the UPF.

Of course, it will be understood that S71 to S74 only show a preferred implementation of S63 in the embodiment of the present application. In a specific implementation, the implementation of the S63 includes, but is not limited to, the manners listed in the present application.

In S64, the SGSN device transmits, via the UTRAN, the N3 interface IP address and the TEID information of the UPF, and the EPS bearer list that needs to be migrated to the NG-RAN to the UE, so that the UE synchronizes with the NG-RAN.

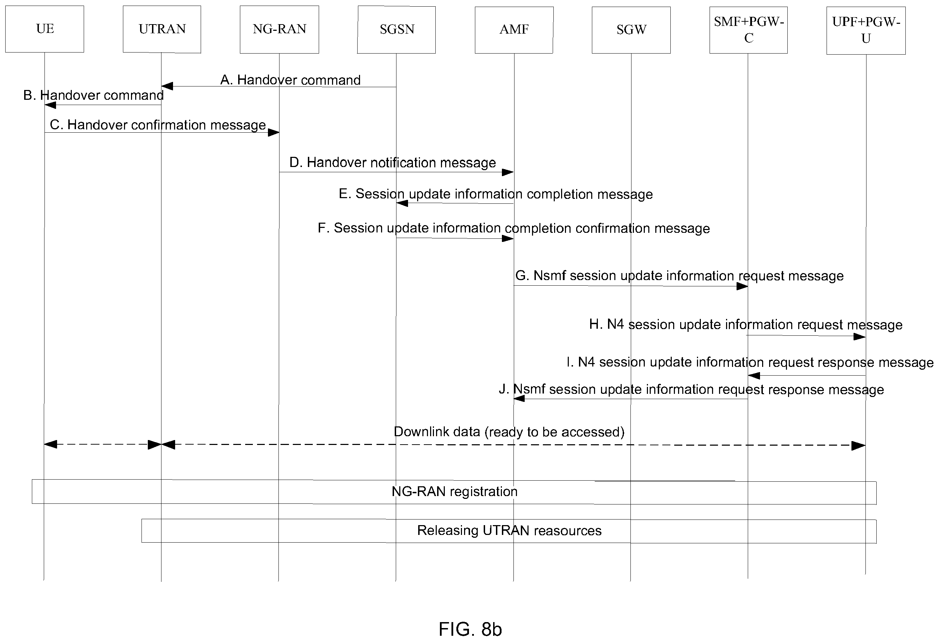

Specifically, as shown in FIG. 8b, in A of FIG. 8b, the SGSN device transmits a handover command (e.g., Handover Command) to the UTRAN, and the message carries the N3 interface IP address and the TEID information of the UPF, and the EPS bearer list that needs to be migrated to the NG-RAN. In B of FIG. 8b, the UTRAN transmits the handover command to the UE. In C of FIG. 8b, the UE transmits a handover confirmation message that carries the N3 interface IP address and the TEID information of the UPF and the EPS bearer list that needs to be migrated (e.g., Handover Confirm) to the NG-RAN to synchronize the above message with the NG-RAN. In this case, the NG-RAN obtains the N3 interface IP address and the TEID information of the UPF, and the EPS bearer list that needs to be migrated to the NG-RAN.

In S65, the AMF device receives the N3 interface IP address and the TEID information of the NG-RAN that are transmitted by the NG-RAN.

Specifically, as shown in FIG. 8b, in D of FIG. 8b, the NG-RAN transmits a handover notification message (e.g., Handover Confirm) to the AMF device, and the handover notification message carries the N3 interface IP address and the TEID information of the NG-RAN.

In S66, the AMF device transmits a handover completion indication to the SMF, so as to notify, via the SMF, the UPF of updating downlink tunnel information to be the N3 interface IP address and the TEID information of the NG-RAN, so that the UE receives uplink data and downlink data via the NG-RAN.

Specifically, as shown in FIG. 8b, in E of FIG. 8b, the AMF device transmits a session update information completion message (e.g., Forward Handover Complete Notification) to the SGSN, so as to notify the SGSN that the UE has been successfully handed over to the NG-RAN. In F of FIG. 8b, the SGSN replies to the AMF device, and transmits a session update information completion acknowledgement message (e.g., Forward Handover Complete Notification ACK), so that the AMF confirms completion of the network handover.

In G of FIG. 8b, the AMF transmits an Nsmf session update information request message (e.g., Nsmf_PDUSession_UpdateSMContext Request) to the SMF, and the Nsmf session update information request message carries a network handover completion indication so as to notify the SMF of transmitting an N4 session modification request message to the UPF. The N4 session modification request message carries the N3 interface IP address and the TEID information of the NG-RAN. According to the above information, the UPF updates the downlink tunnel information to be the N3 interface IP address and the TEID information of the NG-RAN, and then N3 connection is successfully completed. Specifically, in H of FIG. 8b, the SMF transmits an N4 session update information request message (e.g., N4 Session Modification Request) to the UPF. In I of FIG. 8b, the UPF further replies to the SMF with an N4 modification response message (i.e., N4 session update information request response message, e.g., N4 Session Modification Response), so as to notify the SMF that the N4 has been successfully modified. In J of FIG. 8b, the SMF replies to the AMF with an Nsmf session update information request response message (e.g., Nsmf_PDUSession_UpdateSMContext Response) to confirm the completion of the network handover. Then the UE may transmit and receive uplink data and downlink data via the NG-RAN. The handover from the UTRAN to the NG-RAN is completed. After the above steps are completed, the SGSN may further release 3G resources to complete the handover from the UTRAN to the NG-RAN.

The foregoing method is used to implement seamless handover from the UTRAN to the NG-RAN. The SGSN device determines the AMF device according to the target NG-RAN identifier and the TAI information for selecting the NG-RAN that are transmitted by the UTRAN, and transmits mobility context information of user in the UTRAN to the AMF device, so that the AMF device obtains mobility context information of the user in the NG-RAN according to the mobility context information of the user in the UTRAN. And in the subsequent processes, the AMF device synchronizes N3 interface IP address and TEID information of the UPF to the NG-RAN, and updates the UPF downlink tunnel information to be the N3 interface IP address and the TEID information of the NG-RAN, so as to establish the N3 between the NG-RAN and the UPF. As a result, the UE can transmit and receive uplink data and downlink data via the NG-RAN, and the seamless handover from the UTRAN to the NG-RAN is implemented.

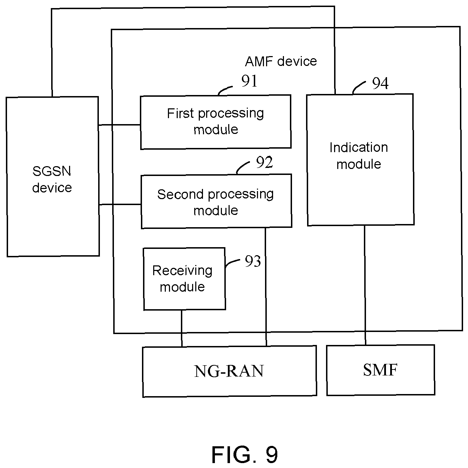

FIG. 9 is a schematic diagram showing a structure of an AMF device, in accordance with embodiments of the present application. As shown in FIG. 9, the device includes:
a first obtaining module 91 used to obtain mobility context information of a user in an NG-RAN according to mobility context information of the user in a UTRAN;
a second processing module 92 used to obtain, according to the mobility context information of the user in the NG-RAN obtained by the first processing module 91, a PDU session ID allocated for PDN connection to be migrated, QoS profile information, a QoS flow ID, and an EPS bearer list that needs to be migrated to the NG-RAN that are transmitted by an SMF;
a receiving module 93 used to receive an N3 interface IP address and TEID information of the NG-RAN transmitted by the NG-RAN; and
an indication module 94 used to transmit a handover completion indication to the SMF to notify, via the SMF, a UPF of updating downlink tunnel information to be the N3 interface IP address and the TEID information of the NG-RAN, so that a UE receives uplink data and downlink data via the NG-RAN.

Optionally, the second processing module 92 is specifically used to:
obtain, according to the mobility context information of the user in the NG-RAN, the PDU session ID allocated for the PDN connection to be migrated, the QoS profile information, the QoS flow ID and an EPS bearer list that needs to be migrated to the NG-RAN that are transmitted by the SMF; obtain, according to the PDU session ID, the QoS profile information, the QoS flow ID, and the EPS bearer list that needs to be migrated to the NG-RAN, the PDU session ID activated on the NG-RAN, the QoS flow ID, and the N3 interface IP address and the TEID information of the NG-RAN that are transmitted by the NG-RAN; obtain, according to the PDU session ID, the QoS flow ID, and the N3 interface IP address and the TEID information of the NG-RAN, an N3 interface IP address and TEID information of the UPF via the SMF; and transmit the N3 interface IP address and the TEID information of the UPF, and the EPS bearer list that needs to be migrated to the NG-RAN to an SGSN device.

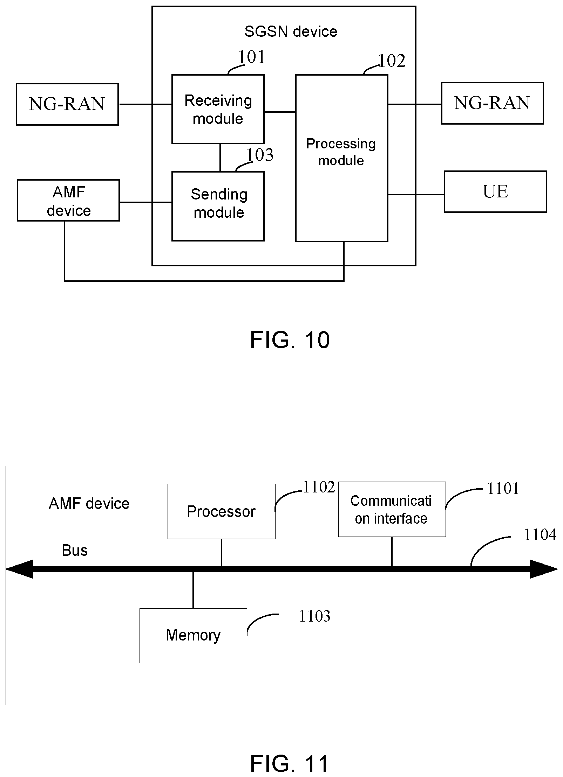

FIG. 10 is a schematic diagram showing a structure of an SGSN device, in accordance with embodiments of the present application. As shown in FIG. 10, the device includes:
a receiving module 101 used to receive a target NG-RAN identifier and TAI information for selecting an NG-RAN that are transmitted by a UTRAN;
a transmitting module 103 used to transmit mobility context information of a user in the UTRAN to an AMF device; where the AMF device is determined by an SGSN device according to the target NG-RAN identifier and the TAI information; and
a processing module 102 used to transmit, via the UTRAN, an N3 interface IP address and TEID information of a UPF and an EPS bearer list that needs to be migrated to the NG-RAN that are obtained from the AMF device, to a UE, so that the UE synchronizes with the NG-RAN.

All relevant contents of the steps involved in the foregoing method embodiments may be invoked in functional description of corresponding functional modules of the SGSN device, and their roles are not repeated here.

The steps of the method or algorithm described in combination with the disclosure of the present application may be implemented in a hardware manner, or may be implemented in a manner in which a processor executes software instructions. For example, the above-mentioned processing module may be implemented by a processor, and the obtaining module may be implemented by a transceiver or other circuits having signal receiving functions.

In a case where an integrated module is adopted, the AMF device includes a processing unit and an interface unit. The processing unit is used to control and manage actions of the AMF device. For example, the processing unit is used to execute computer programs or instructions to implement functions of the AMF device, and the processing unit is used to support the AMF device to perform S21, S22, S23, and S27 in FIG. 2, S62, S63, S65, and S66 in FIG. 6, and S71, S72, S73, and S74 in FIG. 7. The interface unit is used for interaction between the AMF device and other devices; and the interface unit is used to support the interaction between the AMF device and other devices, such as the interaction with the SGSN device. The AMF device may also include a storage unit used to store computer programs or instructions of the AMF device.

In an example where the processing unit is a processor and the interface unit is a communication interface, the AMF device, as shown in FIG. 11, includes a communication interface 1101 and a processor 1102. The communication interface 1101 and the processor 1102 are coupled. For example, the communication interface 1101 and the processor 1102 may be coupled through a bus 1104.

The processor 1102 may be a general-purpose central processing unit (CPU), a controller, an application-specific integrated circuit (ASIC), or one or more integrated circuits for controlling program execution of solutions of the present application.

Of course, a storage device for storing the computer programs or instructions of the AMF device may also be integrated on the processor 1102, or the storage device may be separately disposed, for example, as shown in FIG. 11, a memory 1103 is separately disposed to store the computer programs or instructions of the AMF device. The memory 1103 may be a read-only memory (ROM) or another type of static storage device that may store static information and instructions, a random access memory (RAM), or another type of dynamic storage device that may store information and instructions, or an electrically erasable programmable read-only memory (EEPROM), a compact disc read-only memory (CD-ROM) or another compact disc storage, an optical disc storage (including compressed discs, laser discs, optical discs, digital versatile discs, and Blu-ray discs), a magnetic disc storage medium or another magnetic storage device, or any other medium that may be used to carry or store a desired program code in the form of instructions or data structures and can be accessed by a computer, which is not limited thereto. The memory may exist independently and is connected to the processor through a bus; and the memory may also be integrated with the processor. The memory 1103 is used to store computer programs or instructions for executing the solutions of the present application, and the processor 1102 controls the execution.

The communication interface 1101 is used to support the interaction between the AMF device and other devices, for example, the interaction with the SGSN device. The processor 1102 is used to execute computer programs or instructions stored in the memory 1103, thereby implementing the methods in the embodiments of the present application.

In a case where an integrated module is adopted, the SGSN device includes a processing unit and an interface unit. The processing unit is used to control and manage actions of the SGSN device. For example, the processing unit is used to execute computer programs or instructions to implement functions of the SGSN device, and the processing unit is used to support the SGSN device to perform S24, S25, and S26 in FIG. 2, and S60, S61, and S64 in FIG. 6. The interface unit is used to support the interaction between the SGSN device and other devices, such as the interaction with the AMF device. The SGSN device may also include a storage unit used to store computer programs or instructions of the SGSN device.

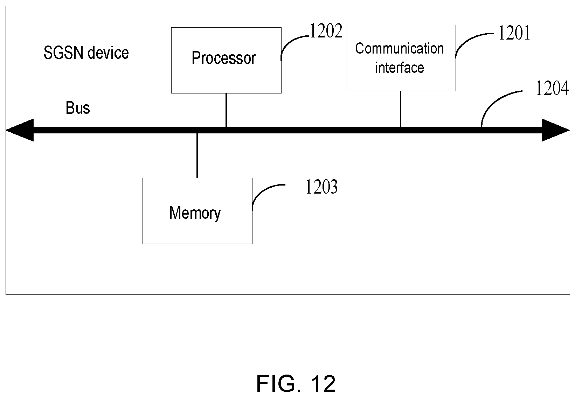

The processing unit being a processor and the interface unit being a communication interface are taken as an example. The SGSN device is as shown in FIG. 12 and includes a communication interface 1201 and a processor 1202. The communication interface 1201 and the processor 1202 are coupled. For example, the communication interface 1201 and the processor 1202 may be coupled through a bus 1204.

The processor 1202 may be a general-purpose central processing unit (CPU), a controller, an application-specific integrated circuit (ASIC), or one or more integrated circuits for controlling program execution of solutions of the present application.

Of course, a storage device for storing the computer programs or instructions of the SGSN device may also be integrated into the processor 1202, or the storage device may be separately disposed, for example, as shown in FIG. 12, a memory 1203 is separately disposed to store the computer programs or instructions of the SGSN device. The memory 1203 may be a read-only memory (ROM) or another type of static storage device that may store static information and instructions, a random access memory (RAM), or another type of dynamic storage device that may store information and instructions, or an electrically erasable programmable read-only memory (EEPROM), a compact disc read-only memory (CD-ROM) or another compact disc storage, an optical disc storage (including compressed discs, laser discs, optical discs, digital versatile discs, and Blu-ray discs), a magnetic disc storage medium or another magnetic storage device, or any other medium that may be used to carry or store a desired program code in the form of instructions or data structures and can be accessed by a computer, which is not limited thereto. The memory may exist independently and is connected to the processor through a bus; and the memory may also be integrated with the processor. The memory 1203 is used to store computer programs or instructions for executing the solutions of the present application, and the processor 1202 controls the execution.

The communication interface 1201 is used to support the interaction between the SGSN device and other devices, such as the interaction with the AMF device. The processor 1202 is used to execute computer programs or instructions stored in the memory 1203, thereby implementing the methods in the embodiments of the present application.

Specifically, the computer instructions may be composed of corresponding software modules, and the software modules may be stored in a random access memory (RAM), a flash memory, a read only memory (ROM), an erasable and programmable ROM (EPROM), an electrically EPROM (EEPROM), a register, a hard disk, a mobile hard disk, a CD-ROM or any storage media of other forms known in the art. An exemplary storage medium is coupled to the processor, so that the processor can read information from the storage medium, and may write information to the storage medium. Of course, the storage medium may also be an integral part of the processor.

The embodiments of the present application further provide a computer program product. The computer program product includes instructions, and the instructions are used to execute the network handover method provided in the present application.

Those skilled in the art should be aware that in one or more of the above examples, the functions described in the present application may be implemented by hardware, software, firmware, or any combination thereof. When implemented by software, these functions may be stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium may be any available medium that can be accessed by a general-purpose or special-purpose computer.

The above descriptions are only specific implementations of the present disclosure, but the protection scope of the present disclosure is not limited thereto. Any changes or replacements that a person skilled in the art could readily conceive of within the technical scope of the present disclosure shall be included in the protection scope of the present disclosure. Therefore, the protection scope of the present disclosure shall be subject to the protection scope of the claims.

## Claims

1. A network handover method **characterized in that** the network handover method comprises:
obtaining, by an access and mobility management function (AMF) device, a target radio network controller (RNC) identifier (ID) and a network handover indication transmitted by a next generation radio access network (NG-RAN), wherein the target RNC ID is an RNC ID of a universal terrestrial radio access network (UTRAN);
obtaining, by the AMF device according to the network handover indication, session management context information of a user in a session management function (SMF) or a packet data network gateway control function (PGW-C) transmitted by the SMF or the PGW-C; wherein the session management context information includes: an evolved packet system (EPS) bearer ID for network handover, corresponding quality of service (QoS) information, and QoS flow information to be migrated;
transmitting, by the AMF device, mobility context information of the user in the NG-RAN to a serving GPRS support node (SGSN) device, wherein the SGSN device is determined by the AMF device according to the target RNC ID;
obtaining, by the SGSN device, mobility context information of the user in the UTRAN according to the mobility context information of the user in the NG-RAN;
transmitting, by the SGSN device according to the mobility context information of the user in the UTRAN, the EPS bearer ID for network handover and the corresponding QoS information to an RNC of the UTRAN;
transmitting, by the SGSN device, the EPS bearer ID for network handover, and an Internet protocol (IP) address and tunnel endpoint identifier (TEID) information of the SGSN device to the AMF device according to the mobility context information of the user in the UTRAN; and
transmitting, by the AMF device according to the EPS bearer ID, the IP address and the TEID information of the SGSN device, core network tunnel information and the QoS flow information to be migrated to a user equipment (UE) via the NG-RAN, so that the UE initiates a route update according to the core network tunnel information and the QoS flow information to be migrated.

2. The network handover method according to claim 1, **characterized in that** before the UE initiates the route update according to the core network tunnel information and the QoS flow information to be migrated, the method further comprises:
receiving, by the AMF device, relocation information transmitted by the SGSN device, wherein the relocation information includes location information of the RNC of the UTRAN.

3. The network handover method according to claim 1, **characterized in that** before the UE initiates the route update according to the core network tunnel information and the QoS flow information to be migrated, the network handover method further comprises:
transmitting, by the SGSN device, a user plane IP address and TEID information of the UTRAN to a serving gateway (S-GW) according to the mobility context information of the user in the UTRAN, so that the S-GW notifies, according to the user plane IP address and the TEID information of the UTRAN, the SMF or the PGW-C of updating an access type; and
receiving, by the SGSN device, a user plane information update message transmitted by the SMF or the PGW-C via the S-GW, wherein the user plane information update message carries updated user plane tunnel information.

4. An access and mobility management function (AMF) device, **characterized in that** the AMF device comprises:
an obtaining module used to obtain a target radio network controller (RNC) identifier (ID) and a network handover indication transmitted by a next generation radio access network (NG-RAN), wherein the target RNC ID is an RNC ID of a universal terrestrial radio access network (UTRAN);
a processing module used to obtain session management context information of a user in a session management function (SMF) or a packet data network gateway control function (PGW-C) transmitted by the SMF or the PGW-C according to the network handover indication obtained by the obtaining module; wherein the session management context information includes: an evolved packet system (EPS) bearer ID for network handover, corresponding quality of service (QoS) information, and QoS flow information to be migrated; and
a transmitting module used to transmit mobility context information of the user in the NG-RAN to a serving GPRS support node (SGSN) device, wherein the SGSN device is determined by the transmitting module according to the target RNC ID;
wherein the transmitting module is further used to transmit, according to the EPS bearer ID, and an ID address and TEID information of the SGSN device transmitted by the SGSN device, core network tunnel information and the QoS flow information to be migrated to a user equipment (UE) via the NG-RAN, so that the UE initiates a route update according to the core network tunnel information and the QoS flow information to be migrated.

5. The AMF device according to claim 4, **characterized in that** the AMF device further comprises a receiving module used to receive relocation information transmitted by the SGSN device, wherein the relocation information includes location information of an RNC of the UTRAN.

6. A serving GPRS support node (SGSN) device, **characterized in that** the SGSN device comprises:
a processing module used to obtain mobility context information of a user in a universal terrestrial radio access network (UTRAN) according to mobility context information of the user in a next generation radio access network (NG-RAN) transmitted by an access and mobility management function (AMF) device; and
a transmitting module used to transmit, according to the mobility context information of the user in the UTRAN, an evolved packet system (EPS) bearer identifier (ID) for network handover and corresponding quality of service (QoS) information to a radio network controller (RNC) of the UTRAN;
wherein the transmitting module is further used to transmit, according to the mobility context information of the user in the UTRAN, the EPS bearer ID for network handover, and an Internet protocol (IP) address and tunnel endpoint identifier (TEID) information of the SGSN device to the AMF device.

7. The SGSN device according to claim 6, **characterized in that** the transmitting module is further used to transmit relocation information to the AMF device, wherein the relocation information includes location information of the RNC of the UTRAN.

8. The SGSN device according to claim 6, **characterized in that** the transmitting module is further used to transmit, according to the mobility context information of the user in the UTRAN, a user plane IP address and TEID information of the UTRAN to a serving gateway (S-GW), so that the S-GW notifies, according to the user plane IP address and the TEID information of the UTRAN, a session management function (SMF) or a packet data network gateway control function (PGW-C) of updating an access type;
wherein a receiving module is used to receive a user plane information update message transmitted by the SMF or the PGW-C via the S-GW, wherein the user plane information update message carries updated user plane tunnel information.

9. A network handover method, **characterized in that** the method comprises:
receiving, by a serving GPRS support node (SGSN) device, a target next generation radio access network (NG-RAN) identifier and track area identity (TAI) information for selecting an NG-RAN that are transmitted by a radio network controller (RNC) of a universal terrestrial radio access network (UTRAN);
transmitting, by the SGSN device, mobility context information of a user in the UTRAN to an access and mobility management function (AMF) device, wherein the AMF device is determined by the SGSN device according to the target NG-RAN identifier and the TAI information;
obtaining, by the AMF device, mobility context information of the user in the NG-RAN according to the mobility context information of the user in the UTRAN;
transmitting, by the AMF device according to the mobility context information of the user in the NG-RAN, an N3 interface Internet protocol (IP) address and tunnel endpoint identifier (TEID) information of a user plane function (UPF), and an evolved packet system (EPS) bearer list that needs to be migrated to the NG-RAN to the SGSN device;
transmitting, by the SGSN device, the N3 interface IP address and the TEID information of the UPF, and the EPS bearer list that needs to be migrated to the NG-RAN to a user equipment (UE) via the RNC of the UTRAN, so that the UE synchronizes with the NG-RAN;
receiving, by the AMF device, an N3 interface IP address and TEID information of the NG-RAN that are transmitted by the NG-RAN; and
transmitting, by the AMF device, a handover completion indication to a session management function (SMF), so as to notify, via the SMF, the UPF of updating downlink tunnel information to be the N3 interface IP address and the TEID information of the NG-RAN, so that the UE receives uplink data and downlink data via the NG-RAN.

10. The network handover method according to claim 9, **characterized in that** transmitting, by the AMF device according to the mobility context information of the user in the NG-RAN, the N3 interface IP address and the TEID information of the UPF, and the EPS bearer list that needs to be migrated to the SGSN device is specifically:
obtaining, by the AMF device according to the mobility context information of the user in the NG-RAN, a protocol data unit (PDU) session identifier (ID) allocated for a public data network (PDN) connection to be migrated, quality of service (QoS) profile information, a QoS flow ID, and the EPS bearer list that needs to be migrated to the NG-RAN that are transmitted by the SMF;
obtaining, by the AMF device according to the PDU session ID, the QoS profile information, the QoS flow ID, and the EPS bearer list that needs to be migrated to the NG-RAN, PDU session ID activated on the NG-RAN, QoS flow ID, and the N3 interface IP address and the TEID information of the NG-RAN that are transmitted by the NG-RAN;
obtaining, by the AMF device according to PDU session ID, QoS flow ID, and the N3 interface IP address and the TEID information of the NG-RAN, the N3 interface IP address and the TEID information of the UPF via the SMF; and
transmitting, by the AMF device, the N3 interface IP address and the TEID information of the UPF, and the EPS bearer list that needs to be migrated to the NG-RAN to the SGSN device.

11. An access and mobility management function (AMF) device, **characterized in that** the AMF device comprises:
a first processing module used to obtain mobility context information of a user in a next generation radio access network (NG-RAN) according to mobility context information of the user in a universal terrestrial radio access network (UTRAN);
a second processing module used to transmit, according to the mobility context information of the user in the NG-RAN obtained from the first processing module, an N3 interface Internet protocol (IP) address and tunnel endpoint identifier (TEID) information of a user plane function (UPF), and an evolved packet system (EPS) bearer list that needs to be migrated to the NG-RAN to a serving GPRS support node (SGSN) device;
a receiving module used to receive an N3 interface IP address and TEID information of the NG-RAN that are transmitted by the NG-RAN; and
an indication module used to transmit a handover completion indication to a session management function (SMF), so as to notify, via the SMF, the UPF of updating downlink tunnel information to be the N3 interface IP address and the TEID information of the NG-RAN, so that a UE receives uplink data and downlink data via the NG-RAN.

12. The AMF device according to claim 11, **characterized in that** the second processing module is specially used to:
obtain, according to the mobility context information of the user in the NG-RAN, a protocol data unit (PDU) session identifier (ID) allocated for a public data network (PDN) connection to be migrated, quality of service (QoS) profile information, a QoS flow ID, and the EPS bearer list that needs to be migrated to the NG-RAN that are transmitted by the SMF;
obtain, according to the PDU session ID, the QoS profile information, the QoS flow ID, and the EPS bearer list that needs to be migrated to the NG-RAN, the PDU session ID activated on the NG-RAN, QoS flow ID, and the N3 interface IP address and the TEID information of the NG-RAN that are transmitted by the NG-RAN;
obtain, according to PDU session ID, QoS flow ID, and the N3 interface IP address and the TEID information of the NG-RAN, the N3 interface IP address and the TEID information of the UPF via the SMF; and
transmit the N3 interface IP address and the TEID information of the UPF, and the EPS bearer list that needs to be migrated to the NG-RAN to the SGSN device.

13. A serving GPRS support node (SGSN) device, **characterized in that** the SGSN device comprises:
a receiving module used to receive a target next generation radio access network (NG-RAN) identifier and track area identity (TAI) information for selecting an NG-RAN transmitted by a radio network controller (RNC) of a universal terrestrial radio access network (UTRAN);
a transmitting module used to transmit mobility context information of a user in the UTRAN to an access and mobility management function (AMF) device; wherein the AMF device is determined by the SGSN device according to the target NG-RAN identifier and the TAI information; and
a processing module used to transmit, via the RNC of the UTRAN, an N3 interface Internet protocol (IP) address and tunnel endpoint identifier (TEID) information of a user plane function (UPF), and an evolved packet system (EPS) bearer list that needs to be migrated to the NG-RAN that are obtained from the AMF device to a user equipment (UE), so that the UE synchronizes with the NG-RAN.

14. An access and mobility management function (AMF) device, **characterized in that** the AMF device comprises one or more processors used to execute a computer program code including instructions in a memory, so that the AMF device performs the network handover method according to any of claims 1 to 10.

15. A serving GPRS support node (SGSN) device, **characterized in that** the SGSN device comprises one or more processors used to execute a computer program code including instructions in a memory, so that an AMF device performs the network handover method according to any of claims 1 to 10.

16. A storage medium, **characterized in that** the storage medium stores instructions used to perform the network handover method according to any of claims 1 to 10.

17. A computer program product, **characterized in that** the computer program product comprises instructions, and the instructions are used to perform the network handover method according to any of claims 1 to 10.
